# EUROPÄISCHE PATENTSCHRIFT

(11) **EP 1 933 052 B1**
(45) Veröffentlichungstag und Bekanntmachung des Hinweises auf die Patenterteilung: **16.06.2010**
(21) Anmeldenummer: 07023430.7
(22) Anmeldetag: 04.12.2007
(51) Int. Cl.: F16D 13/64

(54) **Kupplungs- oder Bremsscheibe**
Clutch or brake disk
Disque d'embrayage ou de frein

(30) Priorität: 15.12.2006 DE 102006059185; 16.11.2007 DE 102007054784
(43) Veröffentlichungstag der Anmeldung: 18.06.2008
(73) Patentinhaber: ZF Friedrichshafen AG, 88038 Friedrichshafen (DE)
(72) Erfinder: Ament, Norbert, 97714 Eltingshausen (DE)

(56) Entgegenhaltungen:
- US-A- 2 244 134
- US-A1- 2006 191 767

## Beschreibung

Die Erfindung betrifft eine Kupplungs- oder Bremsscheibe, insbesondere eine Kupplungsscheibe einer Reibungskupplung, die eine Trägerscheibe aufweist, an der mindestens ein Belagträger befestigt ist, der mindestens einen Reibbelag trägt, wobei der Belagträger einen sich radial erstreckenden Trägerabschnitt aufweist, von dem aus sich auf mindestens zwei unterschiedlichen Radien mindestens je ein Belagträgerflügel erstreckt.

Eine Kupplungsscheibe dieser Art ist beispielsweise aus der DE 27 16 462 A1 bekannt. Die Reibbeläge werden hier von Belagträgern gehalten bzw. getragen, wobei die Belagträger wiederum an einer Trägerscheibe befestigt sind. Am radial innenliegenden Ende der Belagträger sind Befestigungsabschnitte vorhanden, die Bohrungen für den Durchtritt von Nieten aufweisen. In der Vorderansicht weisen die Belagträger eine Struktur auf, die von einem sich radial erstreckenden Trägerabschnitt geprägt ist, wobei sich symmetrisch zu beiden Seiten des Trägerabschnitts Belagträgeflügel erstrecken. Die Belagträger weisen hierbei eine ebene Grundform auf.

Eine andere Ausgestaltung der Belagträger ist aus der DE 27 51 043 A1 bekannt. Hier sind die Belagträger mit einer Welligkeit versehen.

Eine weitere Kupplungsscheibe ist aus der gattungsgemäßen US 2006 / 0191767 A1 bekannt, bei der an Belagfederblechen jeweils ebene Klebeflächen ausgebildet sind zur Anbindung von Reibbelagringen über einen Klebezement. Hierbei sollen die Reibbeläge in Axialrichtung sich gegeneinander vorspannen. Die Belagfederbleche müssen dabei sehr große Klebeflächen aufweisen.

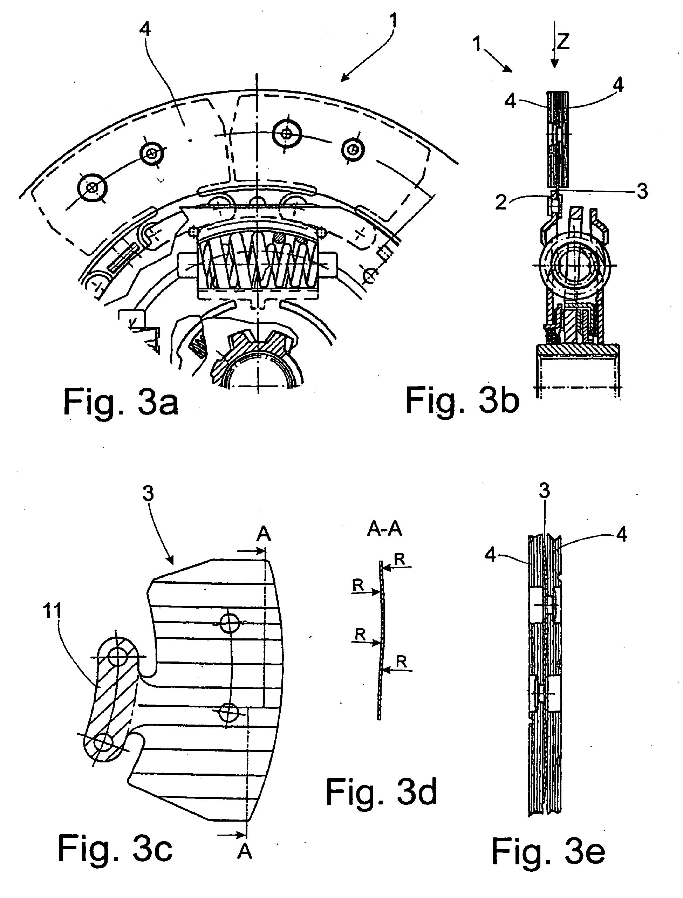

Vorbekannte Ausgestaltungen von Belagträgern für Kupplungsscheiben sind in den Figuren 3, 4 und 5 dargestellt.

In Fig. 3a bis 3e ist in verschiedenen Darstellungen eine Kupplungsscheibe 1 bzw. ein Belagträger 3 derselben zu sehen, wobei - wie es am besten aus Fig. 3d zu sehen ist - der Belagträger 3 aus einem nicht-ebenen, d. h. gewellten Blech besteht. Wie anhand der Darstellung gemäß Fig. 3e zu erkennen ist, liegt hier eine sog. B-Belagfederung vor. Durch die nicht-ebene Ausbildung des Belagträgers 3 wird ein gewisser Federweg bei der Beaufschlagung der Kupplungsscheibe 1 durch Axialkräfte erreicht. Der Biegelinienverlauf geht hier über die Ringfläche des Reibbelags 4 von innen nach außen nur in eine Richtung. Dadurch kann sich bei hohen Belastungen der Reibbelag 4 der Belagfederbiegekontur nachformen. Hieraus resultieren ein höherer Verschleiß an den höchsten Punkten und ein höherer Belagfederungsrückgang.

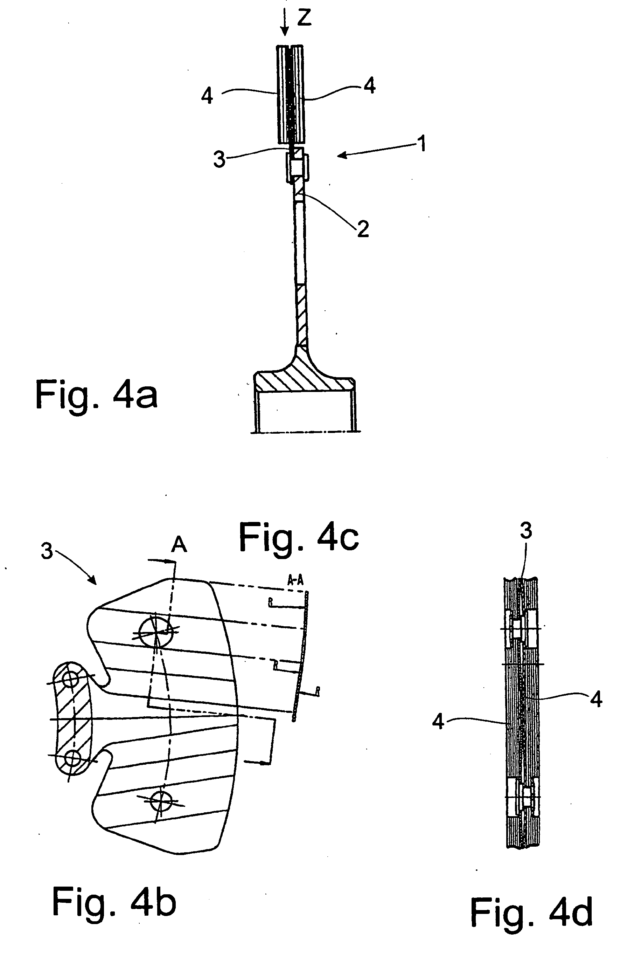

Entsprechendes gilt für die vorbekannte Ausgestaltung gemäß Fig. 4. Hier ist eine Ausbildung als sog. D-Belagfederung vorgesehen, wie es am besten aus Fig. 4d hervorgeht. Die genannten Nachteile sind auch hier anzutreffen.

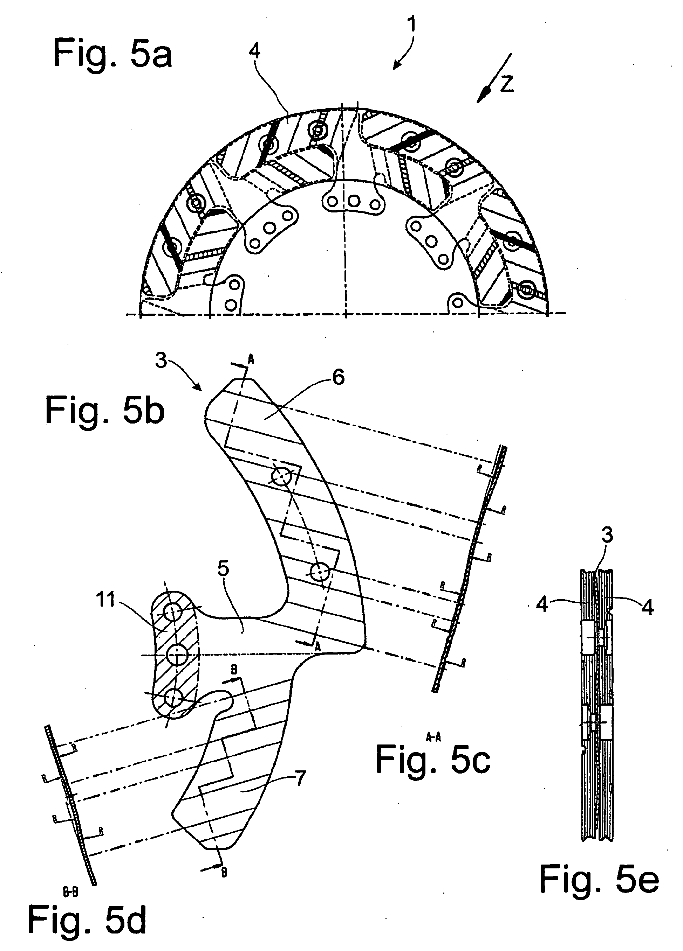

Eine vorbekannte Ausgestaltung einer Kupplungsscheibe mit einem anderen Belagträger geht aus Fig. 5 hervor. Hier ist eine Bauart gemäß einer verschachtelten B-Belagfederung zu sehen. An den sich radial erstreckenden Trägerabschnitt 5 des Belagträgers 3 schließen sich auf unterschiedlichen Radien nach unterschiedlichen Seiten erstreckende Belagträgerflügel 6 und 7 an. Im montierten Zustand - s. Fig. 5a - bilden die einzelnen Flügel 6, 7 sich ergänzende Bereiche einer insgesamt ringförmigen Struktur. Auch hier sind die Belagträger und namentlich ihre Flügel 6, 7 wellig ausgebildet, wie es sich aus den Schnittdarstellungen gemäß Fig. 5c und 5d ergibt. Die oben genannten Nachteile werden durch diese Bauweise zwar beseitigt. Allerdings hat diese Ausführung den Nachteil, dass die langen Hebelarme, die die Belagträgerflügel 6, 7 darstellen, spannungstechnisch problematisch sind, insbesondere bei mittleren und höheren Belastungen. Der bei hohen Belastungen notwendige Einsatz von Doppelbelagfederungen ist bei dieser Form zudem nicht möglich. Weitere Nachteile dieser Bauform sind ein größerer Stanzabfall und ein schlechteres Handling aufgrund der langen Flügel.

Der Erfindung liegt daher die **Aufgabe** zugrunde, eine mit einem Belagträger (Belagfeder) versehe Kupplungs- oder Bremsscheibe der gattungsgemäßen Art so fortzubilden, dass Federungsverluste, d. h. ein Belagfederungsrückgang, bedingt durch Einarbeitung, Belagnachformung und Verschleiß minimiert werden, wobei eine kompakte Bauart angestrebt wird. Zudem soll insbesondere für hohe Belastungen bzw. hohe Federungen ein Einsatz als Doppelbelagfeder (Bauart als D-Belagfederung) möglich sein. Es soll sich weiterhin um eine günstig zu fertigende und damit wirtschaftliche Lösung handeln.

Die **Lösung** dieser Aufgabe durch die Erfindung ist dadurch gekennzeichnet, dass sich vom Trägerabschnitt (5) aus je zwei Belagfederflügel (6, 7, 8, 9) auf zwei unterschiedlichen Radien (r₁, r₂) beiderseits vom Trägerabschnitt (5) erstrecken.

Dabei erstrecken sich die Belagfederflügel vorzugsweise im wesentlichen in Umfangsrichtung.

Der Trägerabschnitt kann an seinem radial inneren Ende einen Befestigungsabschnitt aufweisen. Dieser kann Bohrungen für den Durchtritt von Nieten aufweisen.

Zumeist wird jedoch alternativ vorgesehen sein, dass sich vom Trägerabschnitt aus je zwei Belagfederflügel auf zwei unterschiedlichen Radien beiderseits vom Trägerabschnitt erstrecken. In diesem Falle können die beiden radial äußeren Belagfederflügel bezüglich der Ebene des Trägerabschnitts gegensinnig zu den beiden radial inneren Belagfederflügeln verbogen sein. Ferner kann in diesem Falle vorgesehen werden, dass der Belagträger eine Symmetrieebene aufweist, die in radiale Richtung verläuft.

Zumindest ein Belagfederflügel kann in Umfangsrichtung und/oder in radiale Richtung wellig ausgebildet sein. Wellige Bereiche des Belagfederflügels können dabei durch einen ebenen Bereich miteinander verbunden sein.

Zumindest ein Belagfederflügel kann eine Verbiegung aufweisen, die unter einem Winkel zwischen der radialen Richtung und einer Biegeansatzlinie ansetzt. Dabei kann bzw. können der oder die radial innenliegenden Belagfederflügel eine Verbiegung aufweisen, die unter einem Winkel zwischen der radialen Richtung und einer Biegeansatzlinie ansetzt, wobei die Biegeansatzlinie sich auf dem Weg radial nach außen von der radialen Richtung entfernt. Der Winkel liegt dabei bevorzugt zwischen 15° und 45°, besonders bevorzugt zwischen 20° und 32°.

Der oder die radial außenliegenden Belagfederflügel können auch eine Verbiegung aufweisen, die unter einem Winkel zwischen der radialen Richtung und einer Biegeansatzlinie ansetzt, wobei die Biegeansatzlinie sich auf dem Weg radial nach außen an die radiale Richtung annähert. Auch in diesem Falle sind die genannten Winkelbereiche optimal.

Eine Weiterbildung sieht vor, dass mehrere Belagträger in Umfangsrichtung aufeinander folgend angeordnet sind, wobei sie über ihre Befestigungsabschnitte miteinander verbunden sind. In diesem Falle ist gemäß einer bevorzugten Ausgestaltung vorgesehen, dass die Befestigungsabschnitte einen vollständigen Kreisring bilden.

Sowohl in mindestens einem radial innenliegenden als auch in mindestens einem radial außenliegenden Belagfederflügel kann mindestens eine Bohrung zum Anbringen mindestens eines Reibbelags mittels Nieten angeordnet sein. Eine Lösung sieht dabei vor, dass nur in mindestens einem radial außenliegenden Belagfederflügel mindestens eine Bohrung zum Anbringen mindestens eines Reibbelags mittels Nieten angeordnet ist. Möglich ist es aber auch, dass nur in mindestens einem radial innenliegenden Belagfederflügel mindestens eine Bohrung zum Anbringen mindestens eines Reibbelags mittels Nieten angeordnet ist. Weiterhin kann auch vorgesehen werden, dass mindestens eine Bohrung zum Anbringen mindestens eines Reibbelags mittels Nieten in dem im wesentlichen eben ausgebildeten Trägerabschnitt des Belagträgers angeordnet ist.

Weiter kann vorgesehen werden, dass der Belagträger samt Belagfederflügel aus einem Blech besteht, wobei der Belagträger durch einen Stanz- und/oder Umformvorgang hergestellt ist.

Schließlich sieht eine spezielle Ausführungsform der Erfindung vor, dass zwei auf einem Radienstrahl liegende Belagfederflügel radial aneinander grenzend angeordnet sind, wobei die aus einem einzigen Blechteil gefertigten Belagfederflügel durch einen Schervorgang an einer Scherkante voneinander getrennt sind.

Man kann also sagen, dass erfindungsgemäß der Belagträger der Kupplungs- oder Bremsscheibe, der auch als Belagfeder bezeichnet wird, vorzugsweise durch eine entsprechende stanztechnische Maßnahme in der Nähe der radialen Mitte der Belagfederbereiche (in der Nähe der radialen Mitte des Reibbelags) freigestellt wird, um hierdurch zwei radial übereinander liegende Bereiche zu erhalten, deren Biegelinienverläufe zueinander eine unterschiedliche Richtung aufweisen. Hierdurch können die eingangs genannten Probleme vermieden werden, wie es sonst nur mit der vorbekannten Lösung gemäß Fig. 5 möglich ist. Durch die Integration der übereinander liegenden unterschiedlichen Biegebereiche in eine Belagfeder können die langen Flügel gemäß der vorbekannten Lösung nach Fig. 5 vermieden werden.

Durch eine symmetrische Ausgestaltung der Belagfeder ist zudem ein sinnvoller Einsatz als Doppelbelagfeder möglich, so dass die Kupplungsscheibe bei hohen Belastungen bzw. bei hohen Belagfederungen eingesetzt werden kann.

Durch die höhere Anzahl der verschiedenen biegbaren Belagfederflügel kann durch eine unterschiedliche Biegehöhengestaltung der Flügel zueinander relativ leicht eine weiche Anfangskennlinie bei gleichzeitig ausreichender Restfederung verwirklicht werden. Dies kann z. B. genutzt werden, um eine bessere Varianz der Belagfederkennlinien und eine bessere Anfahrmodulation zu erzeugen.

Es kommt also zu einem geringeren Belagfederrückgang und einem geringeren Verschleiß. Gleichzeitig sind anspruchsvolle Belagfederkennlinien möglich.

In der Zeichnung sind Ausführungsbeispiele der Erfindung dargestellt. Es zeigen:
- Fig. 1: die Vorderansicht einer Kupplungsscheibe einer Reibungskupplung,
- Fig. 2: den Schnitt A-A gemäß Fig. 1
- Fig. 3a: einen Ausschnitt der Vorderansicht einer Kupplungsscheibe gemäß dem Stand der Technik,
- Fig. 3b: den Radialschnitt durch die Kupplungsscheibe gemäß Fig. 3a,
- Fig. 3c: einen Belagträger der Kupplungsscheibe gemäß Fig. 3a in der Vorderansicht,
- Fig. 3d: den Schnitt A-A gemäß Fig. 3c,
- Fig. 3e: einen Teil der Kupplungsscheibe in der Ansicht Z gemäß Fig. 3b,
- Fig. 4a: den Radialschnitt durch eine Kupplungsscheibe gemäß dem Stand der Technik in einer zu Fig. 3 alternativen Ausführungsform,
- Fig. 4b: einen Belagträger der Kupplungsscheibe gemäß Fig. 4a in der Vorderansicht,
- Fig. 4c: den Schnitt A-A gemäß Fig. 4b,
- Fig. 4d: einen Teil der Kupplungsscheibe in der Ansicht Z gemäß Fig. 4a,
- Fig. 5a: einen Ausschnitt der Vorderansicht einer Kupplungsscheibe gemäß dem Stand der Technik in einer weiteren zu Fig. 3 und Fig. 4 alternativen Ausführungsform,
- Fig. 5b: einen Belagträger der Kupplungsscheibe gemäß Fig. 5a in der Vorderansicht,
- Fig. 5c: den Schnitt A-A gemäß Fig. 5b,
- Fig. 5d: den Schnitt B-B gemäß Fig. 5b,
- Fig. 5e: einen Teil der Kupplungsscheibe in der Ansicht Z gemäß Fig. 5a,
- Fig. 6: einen Belagträger einer Kupplungsscheibe gemäß der Erfindung in der Vorderansicht,
- Fig. 7: den Belagträger gemäß Fig. 6 in der Vorderansicht samt einigen Schnittdarstellungen durch Belagträgerflügel,
- Fig. 8: eine alternative Ausgestaltung des Belagträgers gemäß Fig. 7,
- Fig. 9: eine weitere alternative Ausgestaltung des Belagträgers gemäß Fig. 7,
- Fig. 10: eine weitere alternative Ausgestaltung des Belagträgers gemäß Fig. 7 und
- Fig. 11: eine weitere alternative Ausgestaltung des Belagträgers gemäß Fig. 7.

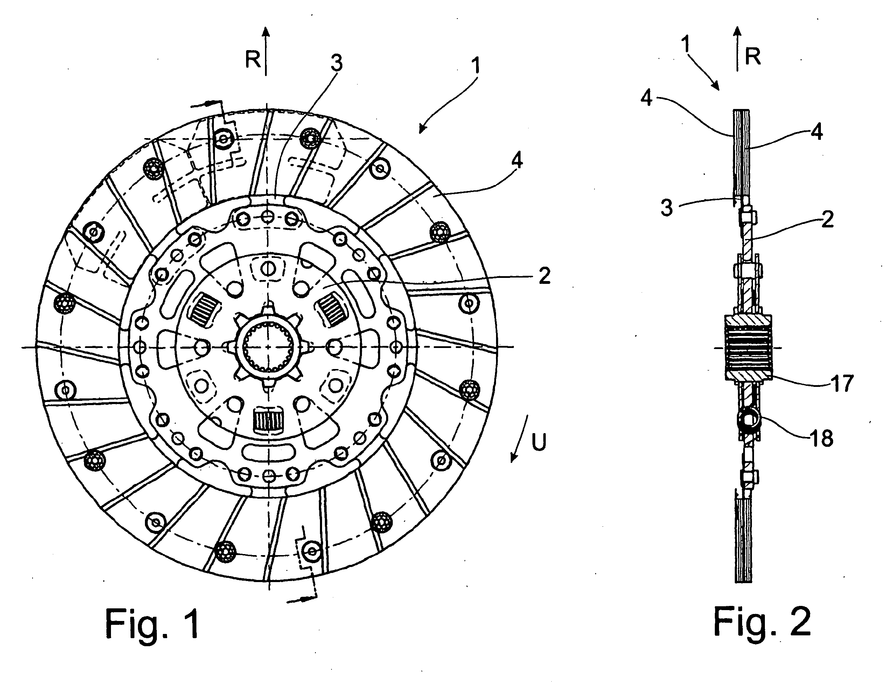

In Fig. 1 und Fig. 2 ist eine Kupplungsscheibe 1 einer Kraftfahrzeugkupplung zu sehen, die in bekannter Weise aufgebaut ist. Ein wesentliches Element der Kupplungsscheibe 1 ist ein Nabenteil 17, mit dem die Kupplungsscheibe 1 drehfest, jedoch axial verschieblich auf einer nicht dargestellten Welle sitzt. Die Kupplungsscheibe 1 weist weiterhin ein Torsionsfederungssystem 18 auf, auf das nur am Rande hingewiesen wird. An eine sich radial nach außen erstreckende Trägerscheibe 2 ist eine Anzahl Belagträger 3 angenietet. Die Belagträger 3 tragen wiederum beidseitig Reibbeläge 4 in bekannter Weise.

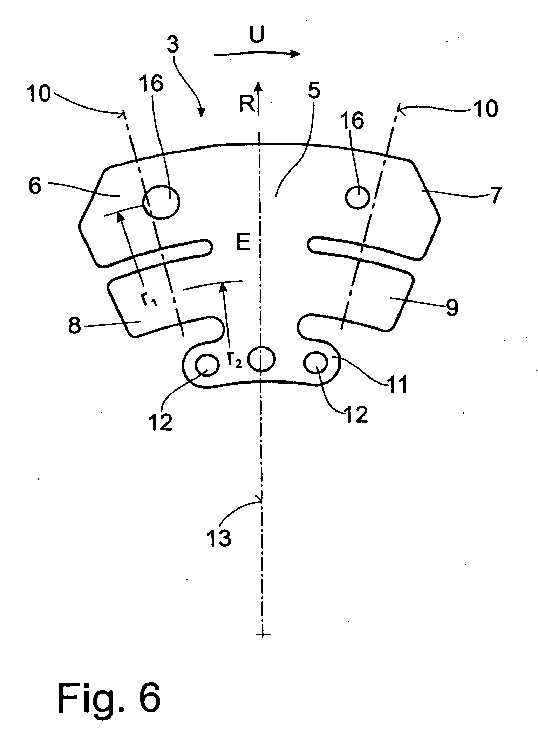

Die zum Einsatz kommenden Belagträger 3 sind in den Figuren 6 bis 10 in verschiedenen möglichen Ausgestaltungen dargestellt, die allerdings nur exemplarisch zu verstehen sind.

In Fig. 6 ist ein Belagträger 3 zu sehen, der aus einem ausgestanzten Blech besteht. In radiale Richtung R erstreckt sich entlang einer Symmetrieebene 13 (die senkrecht auf der Zeichenebene steht) ein zentraler Trägerabschnitt 5, der eben ausgebildet ist. Die Ebene E des Trägerabschnitts 5 ist identisch mit der Zeichenebene. Beidseitig erstrecken sich vom Trägerabschnitt 5 und einstückig mit ihm ausgeführt Belagträgerflügel 6, 7, 8 und 9.

Wesentlich ist, dass die Belagträgerflügel 6, 7, 8, 9 - in radiale Richtung R betrachtet - relativ zu dem eben ausgebildeten Trägerabschnitt 5 eine Verbiegung aufweisen, so dass die Belagträgerflügel 6, 7, 8, 9 zumindest teilweise, vorzugsweise vollständig, nicht in der Ebene E des Trägerabschnitts 5 liegen. Dabei ist weiter vorgesehen, dass mindestens zwei auf unterschiedlichen Radien r₁ und r₂, jedoch auf demselben Radienstrahl 10 liegende Belagträgerflügel 6 und 8 (links in Fig. 6) bzw. 7 und 9 (rechts in Fig. 6) bezüglich des Trägerabschnitts 5 unterschiedlich, insbesondere gegensinnig, verbogen sind.

Unter Verbiegung ist hier zu verstehen, dass die Belagträgerflügel 6, 7, 8, 9 ohne äußere Belastungen nicht in der Ebene E des Trägerabschnitts 5 zu liegen kommen. Vielmehr sind die Flügel 6, 7, 8, 9 relativ zu dem Trägerabschnitt 5 abgekantet. Sie können dann in sich wieder eben oder - gemäß einer bevorzugten Ausgestaltung - selber wellig ausgeführt sein, wobei die Wellenform insbesondere in Umfangsrichtung U verläuft.

In Fig. 6 ist zunächst zu sehen, wie die grundsätzliche Struktur eines Belagträgers 3 aussieht. Die im vorliegenden Falle symmetrisch zu der Symmetrieebene 13 seitlich an dem Trägerabschnitt 5 angeformten Belagträgerflügel 6, 7, 8, 9 sind so angeordnet, dass entlang eines Radienstrahls 10, der also in radiale Richtung R verläuft und der zwei Flügel 6 und 8 bzw. 7 und 9 durchsetzt, betrachtet die beiden Flügel auf unterschiedlichen Radien r₁ bzw. r₂ liegen.

Radial innen liegt der Befestigungsabschnitt 11, der Bohrungen 12 aufweist, mit denen der Belagträger 3 an der Trägerscheibe 2 (s. Fig. 1 und 2) mittels Nieten befestigt werden kann. Für die Anbringung des Reibbeläge 4 sind an geeigneten Stellen Bohrungen 16 in die Belagträgerflügel 6, 7, 8, 9 oder in den Trägerabschnitt 5 eingebracht. Gemäß Fig. 6 weisen nur die beiden radial äußeren Flügel 6 und 7 Bohrungen 16 auf.

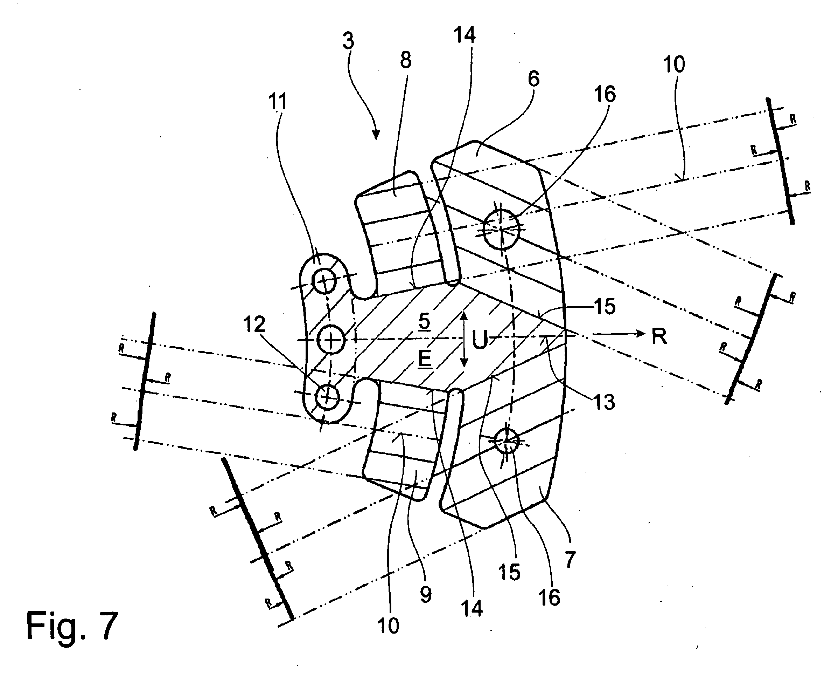

Eine alternative Ausgestaltung des Belagträgers 3 ist in Fig. 7 zu sehen. Die Ebene E des Trägerabschnitts 5 ist hier schraffiert angedeutet. Angrenzend an den Trägerabschnitt 5 sind wieder die Flügel 6, 7, 8, 9 angeordnet, wobei in Fig. 7 Biegeansatzlinien 14 für die Flügel 8 und 9 bzw. Biegeansatzlinien 15 für die Flügel 6 und 7 zu sehen sind, die eine Art Abkantungslinie darstellen, entlang der die Flügel 6, 7, 8, 9 aus der Ebene heraus gebogen sind. Den Schnittdarstellungen durch die Belagträgerflügel 6, 7, 8, 9 ist zu entnehmen, dass die Flügel in Umfangsrichtung U in sich wellig ausgeführt sind. Vorliegend sind die Flügel bereichsweise an mehreren Kanten in sich abgekantet, wobei die Übergänge gerundet ausgeführt sind (s. Radius R in den Schnittdarstellungen).

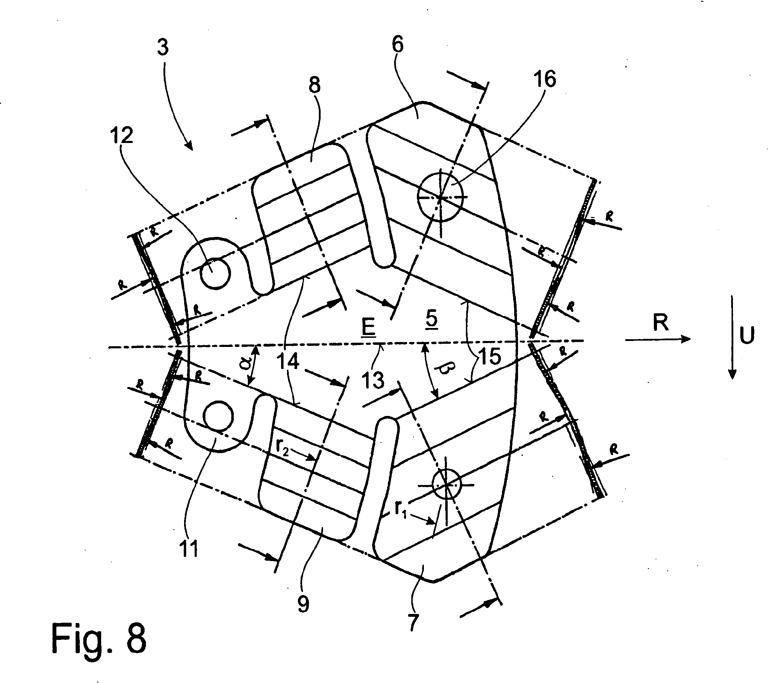

Aus Fig. 8 geht für eine weitere Alternative hervor, dass die Biegeansatzlinien 14 und 15, entlang derer die Abkantung des Flügels 6, 7, 8, 9 zum Trägerabschnitt 5 verläuft, unter jeweiligen Winkeln α und β angeordnet sein können. Für die radial inneren Flügel 8 und 9 öffnet sich dabei der Winkel α in radiale Richtung R nach außen. Für die radial äußeren Flügel 6 und 7 schließt sich der Winkel β bei Fortschreiten in radiale Richtung R.

In diesem Ausführungsbeispiel ist eine Verwendung als Doppel-Belagfeder ("D-Belagfeder") vorgesehen, die einreihig vernietet ist. Die Platzierung der Bohrungen 16 für die Belagvernietung kann in einem oder in mehreren der Flügel 6, 7, 8 bzw. 9 erfolgen. Die D-Belagfeder ist bezüglich ihrer Stanzgeometrie und der Lage der Bohrungen 16 zueinander vorzugsweise symmetrisch auszubilden, um mit gleichen Bauteilen bei einem wechselseitigen Verbau die Teilevielfalt niedrig zu halten. Insofern ist die bevorzugte Lage der Bohrungen 16 in den Flügeln 6 und 7 oder 8 und 9.

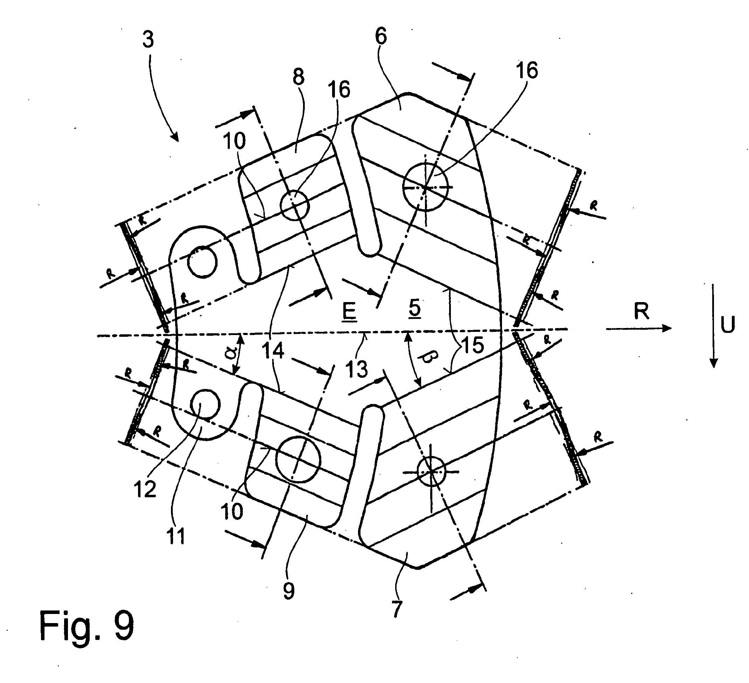

Die Lösung gemäß Fig. 9 zeigt, dass sowohl die radial äußeren Flügel 6 und 7 als auch die radial inneren Flügel 8 und 9 Bohrungen 16 für die Festlegung des Reibbelags 4 haben können.

Bei diesem Ausführungsbeispiel ist eine Verwendung als Doppel-Belagfeder ("D-Belagfeder") vorgesehen, die zweireihig vernietet ist und für hohe Belastungen bzw. breite Belagringe besonders geeignet ist. Die Doppel-Belagfeder ist bezüglich ihrer Stanzgeometrie und der Lage der Bohrungen 16 zueinander auch hier vorzugsweise symmetrisch auszubilden, um mit den gleichen Bauteilen bei einem wechselseitigen Verbau die Teilevielfalt zu begrenzen.

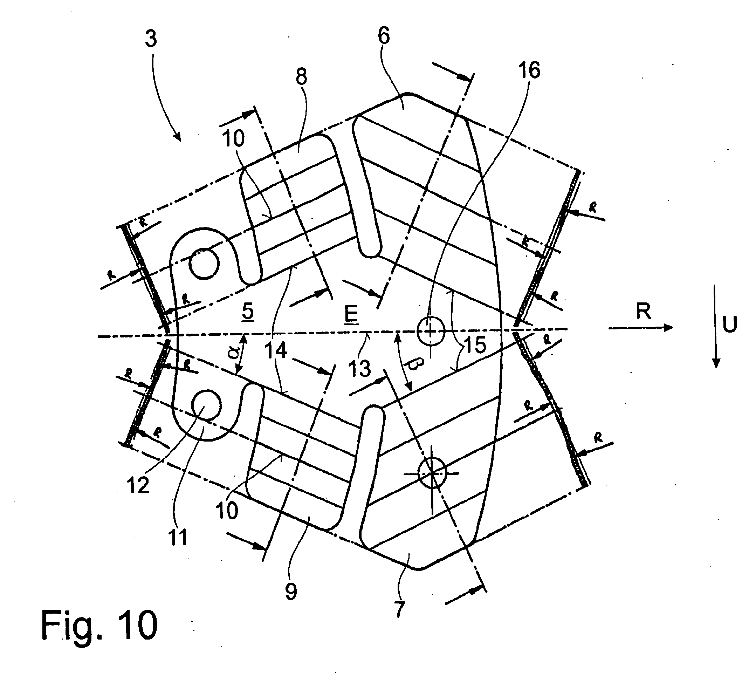

Bei der Lösung gemäß Fig. 10 ist eine Bohrung 16 im Trägerabschnitt 5 und eine in einem Flügel 7 vorgesehen. Diese Lösung ist bevorzugt für die Verwendung als Einfach-Belagfeder vorgesehen ("B-Belagfeder").

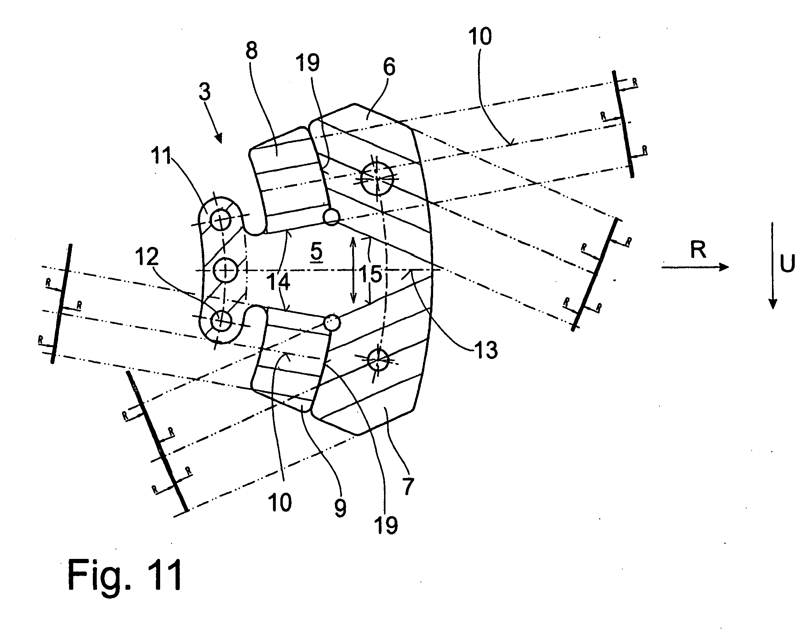

In Fig. 11 ist eine weitere alternative Ausgestaltung der Erfindung illustriert. Im Unterschied zu den vorstehenden Lösungen besteht hier der Belagträger 3 zwar auch wieder aus einem ausgestanzten Blechteil, allerdings ist hier fertigungstechnisch so vorgegangen worden, dass die auf einem Radienstrahl 10 liegenden Belagflügelträger 6 und 8 einerseits und 7 und 9 andererseits an einer in Umfangsrichtung U verlaufenden Scherkante 19 aneinander grenzen. Der aus einer Blechplatine ausgestanzte Belagträger wird an der Scherkante 19 durch einen Schervorgang getrennt, so dass die jeweiligen Belagträgerflügel 6/8 bzw. 7/9 als voneinander getrennte Teile entstehen. Es ist also im Unterschied zu den vorstehenden Lösungen kein stanztechnischer Spalt zwischen den Belagträgerflügeln vorgesehen, der die Flügel radial voneinander beabstandet.

Die Platzierung der Bohrung 16 kann in einem oder in mehreren der Flügel 6, 7, 8, 9 eingebracht werden. Ebenfalls ist dies - wie erwähnt - im Bereich des Trägerabschnitts 5 möglich.

Die Belagfeder kann auch hier - wie dargestellt - symmetrisch ausgebildet sein. Sie kann auch unsymmetrisch gestaltet sein, d. h. die Erstreckung bzw. Länge in Umfangsrichtung U des Flügels 6 kann unterschiedlich zum Flügel 7 sein, und die des Flügels 8 kann unterschiedlich zum Flügel 9 sein.

Es ist natürlich auch möglich, dass der Belagträger 3 nur aus einem linken oder rechten Bereich - entlang der Symmetrieebene 13 getrennt - besteht. In diesem Falle erstrecken sich zwei oder mehrere Flügel nur zu einer Seite in Umfangsrichtung U vom Trägerabschnitt 5 weg.

Eine weitere Variante sieht vor, dass die radial äußeren Flügel eine Biegung bzw. eine Biegelinie aufweisen, die in die selbe Richtung schräg gestellt bzw. abgekantet ist, wobei die radial inneren Flügel entsprechend entgegen gestellt schräg bzw. abgekantet zu den radial äußeren verlaufen.

Der Verlauf der Verbiegung bzw. Abkantung der Flügel kann auch spiegelverkehrt hinsichtlich einer Linie zwischen den radial äußeren und radial inneren Flügeln sein.

Grundsätzlich haben dabei die radial übereinander liegenden Belagträgerflügel 6 und 8 bzw. 7 und 9 bezogen auf ihren Biegelinienverlauf eine unterschiedliche Richtung zueinander.

Jeder der Flügel kann mindestens eine Erhebung und/oder eine Vertiefung haben, woraus sich eine Welligkeit ergibt. Die Erhebungen bzw. Vertiefungen können dabei als ebenes Plateau ausgebildet sein.

Die Flügel 6, 7, 8, 9, die nicht mit ihren Nachbarbauteilen (Belag oder Trägerblech mit Belag) verbunden (vernietet) sind, können auch auf eine niedrigere Höhe gebogen sein. Hierdurch kann man einen großen Einfluss auf den Verlauf bzw. die Charakteristik der Belagfederkennlinien nehmen. Man kann z. B. einen weicheren Anfangsverlauf der Belagfederkennlinie erzeugen, um eine weichere Anfahrmodulation zu bekommen, man kann auch stärker gestufte progressive Belagfederkennlinien erzeugen. Dies kann ferner dazu genutzt werden, um bei hoch belasteten Belagfedern mehr Restfederung im belasteten Zustand zu erhalten, um z. B. Squealgeräusche zu vermeiden.

Die Einzelbelagfedern können im planen Fußbereich - also im Bereich der Befestigungsabschnitte 11 - auch miteinander in Umfangsrichtung U verbunden sein, um weniger Bauteile zu erhalten oder um sogar nur einen Belagfederring zu erhalten.

### Bezugszeichenliste

- 1: Kupplungs- oder Bremsscheibe
- 2: Trägerscheibe
- 3: Belagträger
- 4: Reibbelag
- 5: Trägerabschnitt
- 6: Belagträgerflügel
- 7: Belagträgerflügel
- 8: Belagträgerflügel
- 9: Belagträgerflügel
- 10: Radienstrahl
- 11: Befestigungsabschnitt
- 12: Bohrung
- 13: Symmetrieebene
- 14: Biegeansatzlinie
- 15: Biegeansatzlinie
- 16: Bohrung
- 17: Nabenteil
- 18: Torsionsfederungssystem
- 19: Scherkante

- r₁: Radius
- r₂: Radius
- R: Radiale Richtung
- U: Umfangsrichtung
- E: Ebene

- α: Winkel
- β: Winkel

## Patentansprüche

1. Kupplungs- oder Bremsscheibe (1), insbesondere Kupplungsscheibe einer Reibungskupplung, die eine Trägerscheibe (2) aufweist, an der mindestens ein Belagträger (3) befestigt ist, der mindestens einen Reibbelag (4) trägt, wobei der Belagträger (3) einen sich radial erstreckenden Trägerabschnitt (5) aufweist, von dem aus sich auf mindestens zwei unterschiedlichen Radien (r₁, r₂) mindestens je ein Belagträgerflügel (6, 7, 8, 9) erstreckt, wobei
die Belagträgerflügel (6, 7, 8, 9) in radiale Richtung (R) betrachtet relativ zu dem im wesentlichen eben (E) ausgebildeten Trägerabschnitt (5) eine Verbiegung aufweisen, so dass die Belagträgerflügel (6, 7, 8, 9) zumindest teilweise nicht in der Ebene (E) des Trägerabschnitts (5) liegen, wobei mindestens zwei auf unterschiedlichen Radien (r₁, r₂), jedoch auf demselben Radienstrahl (10) liegende Belagträgerflügel (6, 7, 8, 9) bezüglich des Trägerabschnitts (5) unterschiedlich, insbesondere gegensinnig, verbogen sind **dadurch gekennzeichnet, dass** sich vom Trägerabschnitt (5) aus je zwei Belagfederflügel (6, 7, 8, 9) auf zwei unterschiedlichen Radien (r₁, r₂) beiderseits vom Trägerabschnitt (5) erstrecken.

2. Kupplungs- oder Bremsscheibe nach Anspruch 1, **dadurch gekennzeichnet, dass** sich die Belagfederflügel (6, 7, 8, 9) im wesentlichen in Umfangsrichtung (U) erstrecken.

3. Kupplungs- oder Bremsscheibe nach Anspruch 1 oder 2, **dadurch gekennzeichnet, dass** der Trägerabschnitt (5) an seinem radial inneren Ende einen Befestigungsabschnitt (11) aufweist.

4. Kupplungs- oder Bremsscheibe nach Anspruch 3, **dadurch gekennzeichnet, dass** der Befestigungsabschnitt (11) Bohrungen (12) für den Durchtritt von Nieten aufweist.

5. Kupplungs- oder Bremsscheibe nach einem der Ansprüche 1 bis 4, **dadurch gekennzeichnet, dass** sich vom Trägerabschnitt (5) aus je ein Belagfederflügel (6, 7, 8, 9) auf zwei unterschiedlichen Radien (r₁, r₂) nach einer Seite des Trägerabschnitt (5) erstreckt.

6. Kupplungs- oder Bremsscheibe nach Anspruch 1, **dadurch gekennzeichnet, dass** die beiden radial äußeren Belagfederflügel (6, 7) bezüglich der Ebene (E) des Trägerabschnitts (5) gegensinnig zu den beiden radial inneren Belagfederflügel (8, 9) verbogen sind.

7. Kupplungs- oder Bremsscheibe nach Anspruch 1 oder 6, **dadurch gekennzeichnet, dass** der Belagträger (3) eine Symmetrieebene (13) aufweist, die in radiale Richtung (R) verläuft.

8. Kupplungs- oder Bremsscheibe nach einem der Ansprüche 1 bis 7, **dadurch gekennzeichnet, dass** zumindest ein Belagfederflügel (6, 7, 8, 9) in Umfangsrichtung (U) und/oder in radiale Richtung (R) wellig ausgebildet ist.

9. Kupplungs- oder Bremsscheibe nach Anspruch 8, **dadurch gekennzeichnet, dass** wellige Bereiche des Belagfederflügels (6, 7, 8, 9) durch einen ebenen Bereich miteinander verbunden sind.

10. Kupplungs- oder Bremsscheibe nach einem der Ansprüche 1 bis 9, **dadurch gekennzeichnet, dass** zumindest ein Belagfederflügel (6, 7, 8, 9) eine Verbiegung aufweist, die unter einem Winkel (α,β) zwischen der radialen Richtung (R) und einer Biegeansatzlinie (14, 15) ansetzt.

11. Kupplungs- oder Bremsscheibe nach Anspruch 10, **dadurch gekennzeichnet, dass** der oder die radial innenliegenden Belagfederflügel (8, 9) eine Verbiegung aufweist bzw. aufweisen, die unter einem Winkel (α) zwischen der radialen Richtung (R) und einer Biegeansatzlinie (14) ansetzt, wobei die Biegeansatzlinie (14) sich auf dem Weg radial nach außen von der radialen Richtung (R) entfernt.

12. Kupplungs- oder Bremsscheibe nach Anspruch 10 oder 11, **dadurch gekennzeichnet, dass** der Winkel (α) zwischen 15° und 45° liegt.

13. Kupplungs- oder Bremsscheibe nach Anspruch 12, **dadurch gekennzeichnet, dass** der Winkel (α) zwischen 20° und 32° liegt.

14. Kupplungs- oder Bremsscheibe nach Anspruch 10, **dadurch gekennzeichnet, dass** der oder die radial außenliegenden Belagfederflügel (6, 7) eine Verbiegung aufweist bzw. aufweisen, die unter einem Winkel (β) zwischen der radialen Richtung (R) und einer Biegeansatzlinie (15) ansetzt, wobei die Biegeansatzlinie (15) sich auf dem Weg radial nach außen an die radiale Richtung (R) annähert.

15. Kupplungs- oder Bremsscheibe nach Anspruch 10 oder 14, **dadurch gekennzeichnet, dass** der Winkel (β) zwischen 15° und 45° liegt.

16. Kupplungs- oder Bremsscheibe nach Anspruch 15, **dadurch gekennzeichnet, dass** der Winkel (β) zwischen 20° und 32° liegt.

17. Kupplungs- oder Bremsscheibe nach einem der Ansprüche 3 bis 16, **dadurch gekennzeichnet, dass** mehrere Belagträger (3) in Umfangsrichtung (U) aufeinander folgend angeordnet sind, wobei sie über ihre Befestigungsabschnitte (11) miteinander verbunden sind.

18. Kupplungs- oder Bremsscheibe nach Anspruch 17, **dadurch gekennzeichnet, dass** die Befestigungsabschnitte (11) einen vollständigen Kreisring bilden.

19. Kupplungs- oder Bremsscheibe nach einem der Ansprüche 1 bis 18, **dadurch gekennzeichnet, dass** sowohl in mindestens einem radial innenliegenden als auch in mindestens einem radial außenliegenden Belagfederflügel (6, 7, 8, 9) mindestens eine Bohrung (16) zum Anbringen mindestens eines Reibbelags (4) mittels Nieten angeordnet ist.

20. Kupplungs- oder Bremsscheibe nach einem der Ansprüche 1 bis 18, **dadurch gekennzeichnet, dass** nur in mindestens einem radial außenliegenden Belagfederflügel (6, 7, 8, 9) mindestens eine Bohrung (16) zum Anbringen mindestens eines Reibbelags (4) mittels Nieten angeordnet ist.

21. Kupplungs- oder Bremsscheibe nach einem der Ansprüche 1 bis 18, **dadurch gekennzeichnet, dass** nur in mindestens einem radial innenliegenden Belagfederflügel (6, 7, 8, 9) mindestens eine Bohrung (16) zum Anbringen mindestens eines Reibbelags (4) mittels Nieten angeordnet ist.

22. Kupplungs- oder Bremsscheibe nach einem der Ansprüche 1 bis 21, **dadurch gekennzeichnet, dass** mindestens eine Bohrung (16) zum Anbringen mindestens eines Reibbelags (4) mittels Nieten in dem im wesentlichen eben (E) ausgebildeten Trägerabschnitt (5) des Belagträgers (3) angeordnet ist.

23. Kupplungs- oder Bremsscheibe nach einem der Ansprüche 1 bis 22, **dadurch gekennzeichnet, dass** der Belagträger (3) samt Belagfederflügel (6, 7, 8, 9) aus einem Blech besteht, wobei der Belagträger (3) durch einen Stanz- und/oder Umformvorgang hergestellt ist.

24. Kupplungs- oder Bremsscheibe nach einem der Ansprüche 1 bis 23, **dadurch gekennzeichnet, dass** zwei auf einem Radienstrahl (10) liegende Belagfederflügel (6. 8: 7. 9) radial aneinander grenzend angeordnet sind, wobei die aus einem einzigen Blechteil gefertigten Belagfederflügel (6, 8; 7, 9) durch einen Schervorgang an einer Scherkante (19) voneinander getrennt sind.

## Claims

1. Clutch or brake disc (1), particularly clutch disc of a friction clutch, comprising a carrier disc (2) to which at least one lining carrier (3) which carries at least one friction lining (4) is fastened, wherein the lining carrier (3) comprises a radially extending carrier section (5) from which at least in each case one lining carrier wing (6, 7, 8, 9) extends on at least two different radii (r₁, r₂), wherein the lining carrier wings (6, 7, 8, 9) seen in radial direction (R) comprise a bend relative to the carrier section (5) which is of substantially planar (E) design, so that the lining carrier wings (6, 7, 8, 9) at least partially do not lie in the plane (E) of the carrier section (5), wherein at least two lining carrier wings (6, 7, 8, 9) lying on different radii (r₁, r₂) but on the same radius ray (10) are bent differently, more preferably in opposite directions, with respect to the carrier section (5), **characterized in that** from the carrier section (5) two lining spring wings (6, 7, 8, 9) extend on two different radii (r₁, r₂) on both sides of the carrier section (5).

2. Clutch or brake disc according to Claim 1, **characterized in that** the lining spring wings (6, 7, 8, 9) substantially extend in circumferential direction (U).

3. Clutch or brake disc according to Claim 1 or 2, **characterized in that** the carrier section (5) comprises a fastening section (11) at its radially inner end.

4. Clutch or brake disc according to Claim 3, **characterized in that** the fastening section (11) comprises bores (12) for the passage of rivets.

5. Clutch or brake disc according to any one of the Claims 1 to 4, **characterized in that** from the carrier section (5) in each case one lining spring wing (6, 7, 8, 9) extends on two different radii (r₁, r₂) to one side of the carrier section (5).

6. Clutch or brake disc according to Claim 1, **characterized in that** the two radially outer lining spring wings (6, 7) are bent in the opposite direction to the two radial inner lining spring wings (8, 9) with respect to the plane (E) of the carrier section (5).

7. Clutch or brake disc according to Claim 1 or 6, **characterized in that** the lining carrier (3) comprises a symmetry plane (13) which runs in radial direction (R).

8. Clutch or brake disc according to any one of the Claims 1 to 7, **characterized in that** at least one lining spring wing (6, 7, 8, 9) is designed in a wavy manner in circumferential direction (U) and/or in radial direction (R).

9. Clutch or brake disc according to Claim 8, **characterized in that** wavy regions of the lining spring wing (6, 7, 8, 9) are connected to one another by a planar region.

10. Clutch or brake disc according to any one of the Claims 1 to 9, **characterized in that** at least one lining spring wing (6, 7, 8, 9) comprises a bend which starts at an angle (α, β) between the radial direction (R) and a bend starting line (14, 15).

11. Clutch or brake disc according to Claim 10, **characterized in that** the lining spring wing or lining spring wings (8, 9) located radially inside comprises or comprise a bend which starts at an angle (α) between the radial direction (R) and a bend starting line (14), wherein the bend starting line (14) distances itself from the radial direction (R) on the path radially to the outside.

12. Clutch or brake disc according to Claim 10 or 11, **characterized in that** the angle (α) lies between 15° and 45°.

13. Clutch or brake disc according to Claim 12, **characterized in that** the angle (α) lies between 20° and 32°.

14. Clutch or brake disc according to Claim 10, **characterized in that** the lining spring wing or lining spring wings (6, 7) located radially outside comprises or comprise a bend which starts at an angle (β) between the radial direction (R) and a bend starting line (15), wherein the bend starting line (15) approaches the radial direction (R) on the path radially to the outside.

15. Clutch or brake disc according to Claim 10 or 14, **characterized in that** the angle (β) lies between 15° and 45°.

16. Clutch or brake disc according to Claim 15, **characterized in that** the angle (β) lies between 20° and 32°.

17. Clutch or brake disc according to any one of the Claims 3 to 16, **characterized in that** a plurality of lining carriers (3) are arranged following one another in circumferential direction (U), wherein these are connected to one another by way of their fastening sections (11).

18. Clutch or brake disc according to Claim 17, **characterized in that** the fastening sections (11) form a complete circular ring.

19. Clutch or brake disc according to any one of the Claims 1 to 18, **characterized in that** at least one bore (16) for attaching at least one friction lining (4) by means of rivets is arranged both in at least one lining spring wing (6, 7, 8, 9) located radially inside and also in at least one lining spring wing (6, 7, 8, 9) located radially outside.

20. Clutch or brake disc according to any one of the Claims 1 to 18, **characterized in that** at least one bore (16) for attaching at least one friction lining (4) by means of rivets is arranged only in at least one lining spring wing (6, 7, 8, 9) located radially outside.

21. Clutch or brake disc according to any one of the Claims 1 to 18, **characterized in that** at least one bore (16) for attaching at least one friction lining (4) by means of rivets is arranged only in at least one lining spring wing (6, 7, 8, 9) located radially inside.

22. Clutch or brake disc according to any one of the Claims 1 to 21, **characterized in that** at least one bore (16) for attaching at least one friction lining (4) by means of rivets is arranged in the carrier section (5), which is of substantially planar (E) design, of the lining carrier (3).

23. Clutch or brake disc according to any one of the Claims 1 to 22, **characterized in that** the lining carrier (3) including lining spring wing (6, 7, 8, 9) consists of a metal sheet, wherein the lining carrier (3) is produced by means of a stamping and/or forming operation.

24. Clutch or brake disc according to any one of the Claims 1 to 23, **characterized in that** two lining spring wings (6, 8; 7, 9) located on a radius ray (10) are arranged radially adjoining one another, wherein the lining spring wings (6, 8; 7, 9) manufactured from a single sheet-metal part are separated from one another by means of a shearing operation at a shearing edge (19).

## Revendications

1. Disque d'embrayage ou de frein (1), notamment disque d'embrayage d'un embrayage à friction, qui présente un disque porteur (2), sur lequel est fixé au moins un support de garniture (3), qui porte au moins une garniture de friction (4), le support de garniture (3) présentant une portion de support (5) s'étendant radialement, de laquelle s'étend, sur au moins deux rayons différents (r₁, r₂), à chaque fois au moins une aile de support de garniture (6, 7, 8, 9),
les ailes de support de garniture (6, 7, 8, 9) présentant, vu dans la direction radiale (R), une courbure par rapport à la portion de support (5) réalisée de manière essentiellement plane (E), de sorte que les ailes de support de garniture (6, 7, 8, 9), au moins en partie, ne se situent pas dans le plan (E) de la portion de support (5), au moins deux ailes de support de garniture (6, 7, 8, 9) situées sur des rayons différents (r₁, r₂) mais sur le même faisceau de rayon (10) étant courbées différemment, notamment en sens contraire, par rapport à la portion de support (5),
**caractérisé en ce que** deux ailes de ressort de garniture (6, 7, 8, 9), s'étendent à chaque fois depuis la portion de support (5) sur deux rayons différents (r₁, r₂) de chaque côté de la portion de support (5).

2. Disque d'embrayage ou de frein selon la revendication 1, **caractérisé en ce que** les ailes de ressort de garniture (6, 7, 8, 9) s'étendent essentiellement dans la direction périphérique (U).

3. Disque d'embrayage ou de frein selon la revendication 1 ou 2, **caractérisé en ce que** la portion de support (5) présente à son extrémité radialement interne une portion de fixation (11).

4. Disque d'embrayage ou de frein selon la revendication 3, **caractérisé en ce que** la portion de fixation (11) présente des alésages (12) pour le passage de rivets.

5. Disque d'embrayage ou de frein selon l'une quelconque des revendications 1 à 4, **caractérisé en ce qu'**une aile de ressort de garniture (6, 7, 8, 9) s'étend à chaque fois depuis la portion de support (5) sur deux rayons différents (r₁, r₂) vers un côté de la portion de support (5).

6. Disque d'embrayage ou de frein selon la revendication 1, **caractérisé en ce que** les deux ailes de ressort de garniture radialement externes (6, 7) sont recourbées par rapport au plan (E) de la portion de support (5) en sens contraire par rapport aux deux ailes de ressort de garniture radialement internes (8, 9).

7. Disque d'embrayage ou de frein selon la revendication 1 ou 6, **caractérisé en ce que** le support de garniture (3) présente un plan de symétrie (13) qui s'étend dans la direction radiale (R).

8. Disque d'embrayage ou de frein selon l'une quelconque des revendications 1 à 7, **caractérisé en ce qu'**au moins une aile de ressort de garniture (6, 7, 8, 9) est réalisée sous forme ondulée dans la direction périphérique (U) et/ou dans la direction radiale (R).

9. Disque d'embrayage ou de frein selon la revendication 8, **caractérisé en ce que** des régions ondulées de l'aile de ressort de garniture (6, 7, 8, 9) sont connectées les unes aux autres par une région plane.

10. Disque d'embrayage ou de frein selon l'une quelconque des revendications 1 à 9, **caractérisé en ce qu'**au moins une aile de ressort de garniture (6, 7, 8, 9) présente une courbure qui commence suivant un angle (α, β) entre la direction radiale (R) et une ligne de début de courbure (14, 15).

11. Disque d'embrayage ou de frein selon la revendication 10, **caractérisé en ce que** l'aile ou les ailes de ressort de garniture radialement internes (8, 9) présentent une courbure qui commence suivant un angle (α) entre la direction radiale (R) et une ligne de début de courbure (14), la ligne de début de courbure (14) s'éloignant radialement vers l'extérieur depuis la direction radiale (R).

12. Disque d'embrayage ou de frein selon la revendication 10 ou 11, **caractérisé en ce que** l'angle (α) est compris entre 15° et 45°.

13. Disque d'embrayage ou de frein selon la revendication 12, **caractérisé en ce que** l'angle (α) est compris entre 20° et 32°.

14. Disque d'embrayage ou de frein selon la revendication 10, **caractérisé en ce que** l'aile ou les ailes de ressort de garniture radialement externes (6, 7) présentent une courbure qui commence suivant un angle (β) entre la direction radiale (R) et une ligne de début de courbure (15), la ligne de début de courbure (15) se rapprochant radialement vers l'extérieur de la direction radiale (R).

15. Disque d'embrayage ou de frein selon la revendication 10 ou 14, **caractérisé en ce que** l'angle (β) est compris entre 15° et 45°.

16. Disque d'embrayage ou de frein selon la revendication 15, **caractérisé en ce que** l'angle (β) est compris entre 20° et 32°.

17. Disque d'embrayage ou de frein selon l'une quelconque des revendications 3 à 16, **caractérisé en ce que** plusieurs supports de garniture (3) sont disposés successivement les uns derrière les autres dans la direction périphérique (U), et ils sont connectés les uns aux autres par le biais de leurs portions de fixation (11).

18. Disque d'embrayage ou de frein selon la revendication 17, **caractérisé en ce que** les portions de fixation (11) forment une bague circulaire complète.

19. Disque d'embrayage ou de frein selon l'une quelconque des revendications 1 à 18, **caractérisé en ce qu'**à la fois, dans au moins une aile de ressort de garniture radialement interne et dans au moins une aile de ressort de garniture radialement externe (6, 7, 8, 9), on prévoit au moins un alésage (16) pour le montage d'au moins une garniture de friction (4) au moyen de rivets.

20. Disque d'embrayage ou de frein selon l'une quelconque des revendications 1 à 18, **caractérisé en ce que** l'on prévoit au moins un alésage (16) pour le montage d'au moins une garniture de friction (4) au moyen de rivets dans au moins une aile de ressort de garniture radialement externe (6, 7, 8, 9) seulement.

21. Disque d'embrayage ou de frein selon l'une quelconque des revendications 1 à 18, **caractérisé en ce que** l'on prévoit au moins un alésage (16) pour le montage d'au moins une garniture de friction (4) au moyen de rivets dans au moins une aile de ressort de garniture radialement interne (6, 7, 8, 9) seulement.

22. Disque d'embrayage ou de frein selon l'une quelconque des revendications 1 à 21, **caractérisé en ce que** l'on prévoit au moins un alésage (16) pour le montage d'au moins une garniture de friction (4) au moyen de rivets dans la portion de support (5) du support de garniture (3) réalisée de manière essentiellement plane (E).

23. Disque d'embrayage ou de frein selon l'une quelconque des revendications 1 à 22, **caractérisé en ce que** le support de garniture (3) avec toutes les ailes de ressort de garniture (6, 7, 8, 9) se compose d'une tôle, le support de garniture (3) étant fabriqué par une opération d'estampage et/ou de façonnage.

24. Disque d'embrayage ou de frein selon l'une quelconque des revendications 1 à 23, **caractérisé en ce que** deux ailes de ressort de garniture (6, 8 ; 7, 9) situées sur un faisceau de rayon (10) sont disposées de manière adjacente radialement l'une à l'autre, les ailes de ressort de garniture (6, 8 ; 7, 9) fabriquées à partir d'une seule pièce de tôle étant séparées les unes des autres par une opération de découpage au niveau d'une arête de découpage (19).
